# EUROPEAN PATENT SPECIFICATION

(11) **EP 2 112 459 B1**
(45) Date of publication and mention of the grant of the patent: **12.02.2014**
(21) Application number: 09158362.5
(22) Date of filing: 21.04.2009
(51) Int. Cl.: G01B 5/008, G01B 7/008, G01B 11/00, G01B 21/04, B23Q 11/00, B25J 9/16, G05B 19/04

(54) **Form measuring apparatus**
Formmessvorrichtung
Appareil de mesure de forme

(30) Priority: 23.04.2008 JP 2008112910
(43) Date of publication of application: 28.10.2009
(73) Proprietor: Mitutoyo Corporation, Kawasaki-shi Kanagawa-ken 213-0012 (JP)
(72) Inventor: Kamitani, Hiroshi, Utsunomiya-shi Tochigi (JP); Aoyagi, Shinichiro, Utsunomiya-shi Tochigi (JP); Terashita, Yo, Utsunomiya-shi Tochigi (JP)
(74) Representative: Skone James, Robert Edmund

(56) References cited:
- DE-A1-102006 021 065
- JP-A- 6 347 256
- JP-A- 2001 150 372
- KR-B1- 100 784 736

## Description

### Technical Field

The present invention relates to a form measuring apparatus and, more particularly, a form measuring apparatus constructed such that two or more measuring machines equipped with a driving mechanism respectively are arranged opposedly to put a measured subject therebetween.

### Background Art

In the prior art, as the three-dimesnsional form measuring apparatus for measuring a form of a large measured subject such as a vehicle body at a high speed, the dual type form measuring apparatus in which two three-dimensional measuring machines are arranged opposedly to put a measured subject therebetween such that the measured subject can be measured simultaneously by using two measuring machines has been known. In the case of such type form measuring apparatus, the form measurement of the measured subject can be by to measuring machines, and therefore effective form measurement can be achieved (see Patent Literature 1, for example).

[Patent Literature 1] JP-A-6-347256. This document discloses a dual-type measuring apparatus provided with an interference-preventing function wherein measuring machines, equipped with a driving mechanism, which are arranged so as to be faced, transmit and receive information on a usage region respectively and they perform an interference check. The basis of preventing and controlling an interference is to send the usage region including a measuring probe to the other party and to perform a movement (i.e., a measurement) when a permission is granted from the other party. When it interferes, it is required to wait until the measuring machine of the other party is moved to a position which does not interfere.
[Patent Literature 2] JP-A-2001150372. This document provides synchronous or cooperative motion only by partial robots among plural robots connected through communication lines. The robots can be synchronously or cooperatively operated in accordance with an arbitrarily determined combination.

However, in the case of the dual type form measuring apparatus, such a problem existed that, since vibration is generated while one measuring machine is operating and then this vibration is transmitted to the other measuring machine, measuring accuracy is badly affected. As the conventional countermeasure for eliminating such influence of vibration between two measuring machines, it may be considered that the operator may conduct the operation management of measuring machines. However, when such manual managing approach is employed, operability of the form measuring apparatus is spoiled.

### Summary

The present invention has been made in view of the above problem, and it is an object of the present invention to provide a new form measuring apparatus capable of attaining high operability and measuring accuracy by eliminating the influence of vibration between a plurality of measuring machines.

The invention is directed to a form measuring apparatus to increase measuring accuracy by eliminating the influence of vibration between at least two measuring machines according to claim 1.

The invention is further directed to a form measuring apparatus to increase measuring accuracy by eliminating the influence of vibration between at least two measuring machines according to claim 2.

Also, in the form measuring apparatus according to the present invention, the controlling units are constructed to control any one of the one measuring machine and the other measuring machine as a main measuring machine that is operated on a priority basis, and control remaining one as a sub measuring machine whole operation is restricted depending upon an operation state of the main measuring machine.

According to the present invention, the new form measuring apparatus capable of attaining high operability and measuring accuracy by eliminating the influence of vibration between a plurality of measuring machines can be provided.

### Brief description of the drawings

FIG 1 is an external perspective view illustrating a schematic configuration of a form measuring apparatus according to an embodiment of the present invention.
FIG2 is a system conceptual view showing a system configuration of the form measuring apparatus according to the present embodiment shown in FIG. 1.
FIG.3 is a flowchart explaining a concrete measurement controlling process of the form measuring apparatus according to the present embodiment.
FIG.4 is another flowchart explaining the concrete measurement controlling process of the form measuring apparatus according to the present embodiment.
FIG.5 is still another flowchart explaining the concrete measurement controlling process of the form measuring apparatus according to the present embodiment.

### Detailed description

A referred embodiment of carrying out the present invention will be explained with reference to the drawings hereinafter. Here, the following embodiment should not be interpreted to restrict the invention according to respective claims, and all combinations of features explained in the embodiment are not always indispensable for the solving means of the present invention.

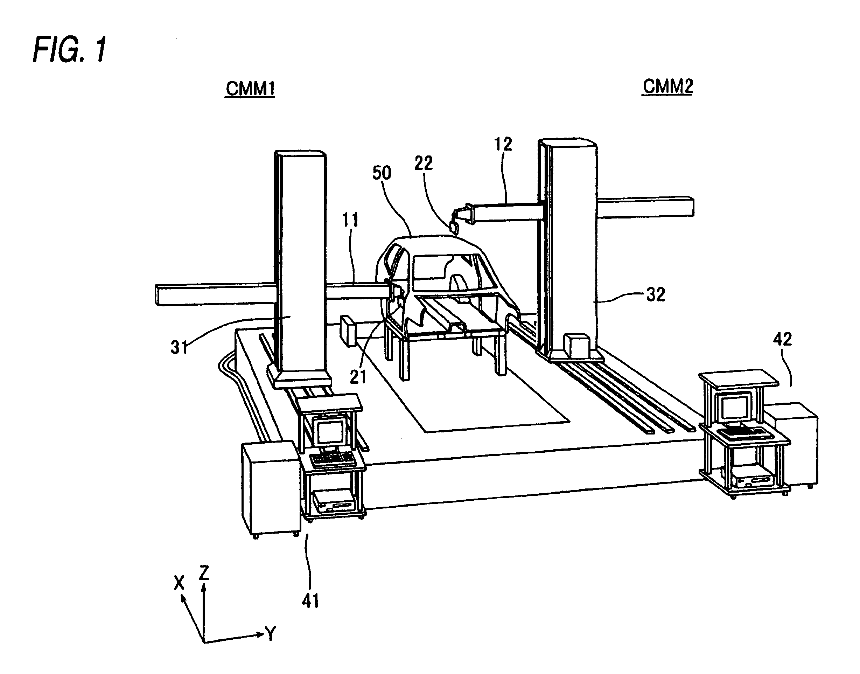

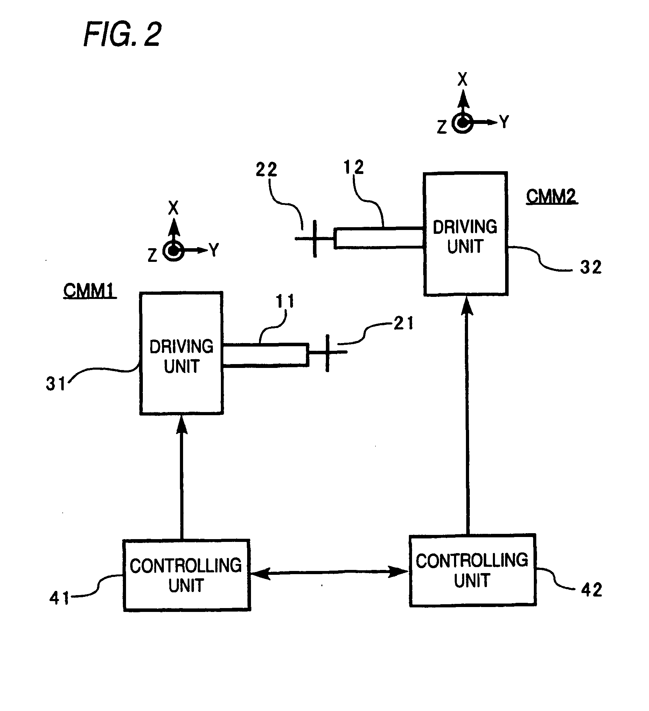

FIG. 1 is an external perspective view illustrating a schematic configuration of a form measuring apparatus according to the present embodiment. FIG.2 is a system conceptual view showing a system configuration of the form measuring apparatus according to the present embodiment shown in FIG.1.

As shown in FIG. 1 and FIG.2, the form measuring apparatus according to the present embodiment is equipped with two three-dimensional measuring machines CMM1, CMM2. Two three- dimensional measuring machines CMM1, CMM2 are constructed such that they are arranged opposedly to put a measured subject therebetween. Here, a spindle 11 and a measuring piece 21 fitted to its top end, a driving unit 31 for driving them, and a controlling unit 41 for performing a moving control for measurement are provided to one three-dimensional measuring machine CMM1. Similarly, a spindle 12 and a measuring piece 22 fitted to its top end, a driving unit 32 for driving them, and a controlling unit 42 for performing a moving control for measurement are provided to the other three-dimensional measuring machine CMM2.

The controlling unit 41 connected to one three- dimensional measuring machine CMM1 and the controlling unit 42 connected to the other three-dimensional measuring machine CMM2 are connected by a cooperation-enabling means via cable or radio. When two controlling units 41, 42 are cooperated to perform the control, the whole operation control in the form measuring apparatus according to the present embodiment can be implemented.

Also, in order to make it possible for two three- dimensional measuring machines CMM1, CMM2 to perform the form measuring operation effectively in conjunction with each other, two controlling units 41, 42 execute the control in such a manner one three-dimensional measuring machine CMM1 is controlled as a main measuring machine that is operable on a priority basis whereas the other three-dimensional measuring machine CMM2 is controlled as a sub measuring machine whose operation is restricted depending upon an operation state of the main measuring machine. Since the control made by two three- dimensional measuring machines CMM1, CMM2 is set in this way, priority levels are specified between two three-dimensional measuring machines CMM1, CMM2, and an effective measuring operation can be realized.

In this case, as the measuring pieces 21, 22 fitted to the top ends of the spindles 11, 12, a contact type or a non-contact type may be provided. Concretely, all types such as touch probe, copying probe, laser probe, image probe, etc. may be employed.

The form measuring apparatus according to the present embodiment has the configuration mentioned above. Therefore, two three-dimensional measuring machines CMM1, CMM2 can execute the measurement in respective directions of three axes X, Y, Z while cooperating with each other. Here, the form measuring apparatus according to the present embodiment can be constructed to have an automatic measuring function utilizing computer control and a manual measuring function executed by the operation controller using the joy stick, or the like. In the below-mentioned explanation, the form measuring apparatus using the automatic measuring function will be explained.

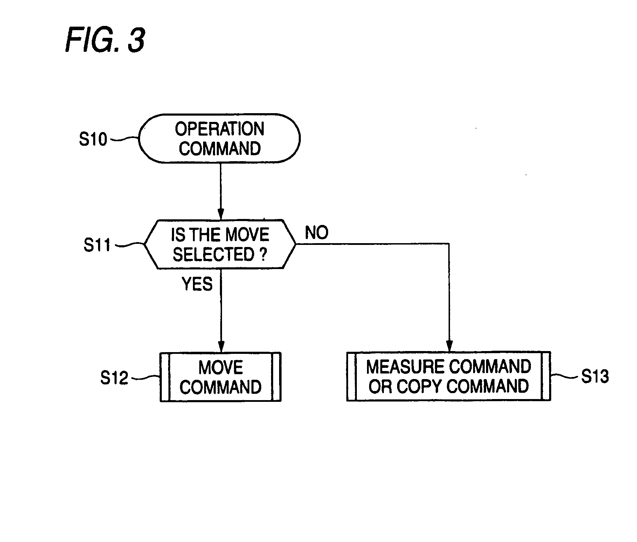

Next, a concrete measurement controlling operation of the form measuring apparatus according to the present embodiment will be explained with reference to FIG.3 to FIG.5 hereunder.

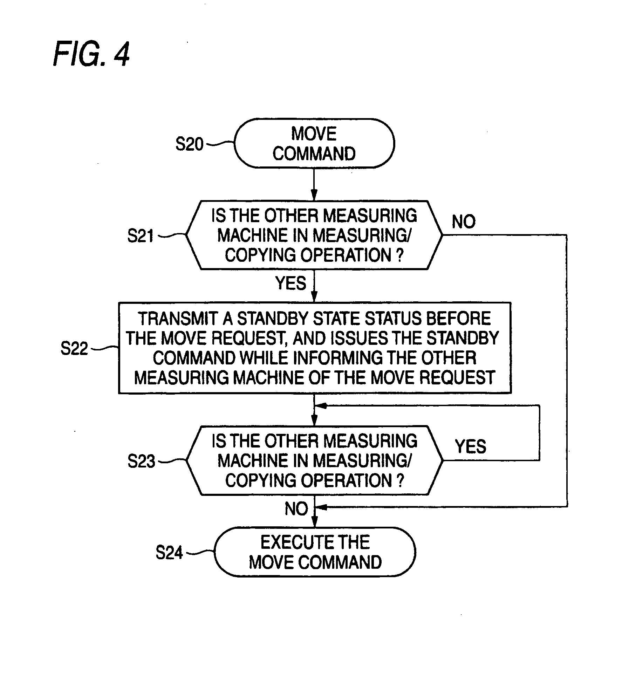

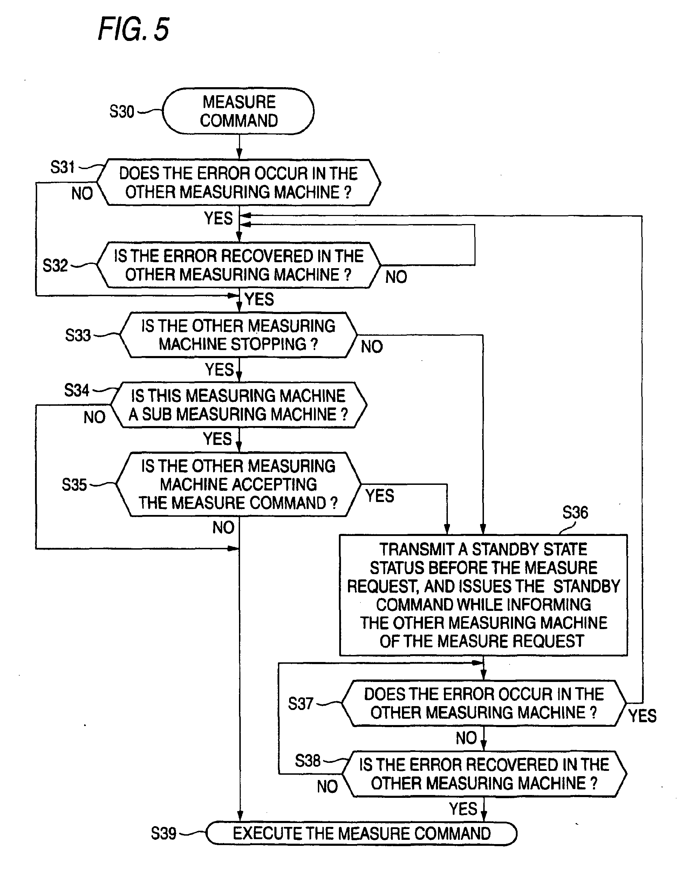

As shown in FIG.3, in the form measuring apparatus according to the present embodiment, first the type of operation command is decided, and it is selected what type of operation should be executed by one three-dimensional measuring machine CMM1 as the main measuring machine, for example, from now. In the case of a flowchart shown in FIG.3, the type of operation command is decided (step S10). Then, it is decided whether or not the moving operation should be done by the three-dimensional measuring machine CMM1 (step S11). If the moving operation should be done (step S11, YES), the move command is selected (step S12), and then the process goes to the move command process shown in FIG.4. If the moving operation should not be done (step S11, NO), the measure command is selected (step S13), and then the process goes to the measure command process shown in FIG.5.

Here, decision of the type of operation command (step S10) may be executed by the program that is set in advance in the controlling units 41, 42. Alternately, the operator may choose such decision via the screen buttons of the controlling units 41, 42, or the like. Also, decision of the selection of operation command (step S11) may be executed by the controlling units 41, 42 that can detect the operation state of the three-dimensional measuring machines CMM1, CMM2. For example, the three-dimensional measuring machine CMM1 as the main measuring machine selects the move command (step S12) when such machine is located in a position remote from a measured subject 50, while the three-dimensional measuring machine CMM1 selects the measure command (step S13) when such machine is located in a position where such machine can measure the form of the measured subject 50 as it is.

Also, as the operation command issued from the controlling units 41, 42 to the three-dimensional measuring machines CMM1, CMM2, the move command to move the three-dimensional measuring machines CMM1, CMM2, the measure command to cause the three-dimensional measuring machines CMM1, CMM2 to execute the measuring operation of the measured subject 50, the copy command to cause the three-dimensional measuring machines CMM1, CMM2 to execute the copying operation of the measured subject 50, the standby command to cause the three-dimensional measuring machines CMM1, CMM2 to stand by, and the like can be set. In this case, in order to clarify the explanation, mainly the case where the move command, the measure command, and the standby command are selected will be explained by way of example.

Next, by reference to FIG.4, the process done when the controlling unit 41 for controlling the three-dimensional measuring machine CMM1 selects the move command will be explained hereunder.

The controlling unit 41 issues the move command to the three-dimensional measuring machine CMM1 (step S20). First, the controlling unit 42 is caused to detect the operation state of the three-dimensional measuring machine CMM2 as the sub measuring machine, and decides whether or not the three-dimensional measuring machine CMM2 is executing the measuring operation or the copying operation (step S21). If the three-dimensional measuring machine CMM2 is not executing the measuring operation or the copying operation (step S21, NO), no problem arises even if vibration occurs during moving operation, and thus the controlling unit 41 causes the three-dimensional measuring machine CMM1 to execute the move command (step S24). In contrast, if the three-dimensional measuring machine CMM2 is executing the measuring operation or the copying operation (step S21, YES), the controlling unit 41 transmits a standby state status before the move request to the three-dimensional measuring machine CMM2, and issues the standby command to the three-dimensional measuring machine CMM1 while informing the three-dimensional measuring machine CMM2 of the move request of the three-dimensional measuring machine CMM1 (step S22).

After the process in step S22 is executed, then the same decision process in step S21 is executed, i.e., the controlling unit 42 is caused to detect the operation state of the three-dimensional measuring machine CMM2 as the sub measuring machine, and decides whether or not the three-dimensional measuring machine CMM2 is executing the measuring operation or the copying operation (step S23). If it is decided in decision process in step S23 that the three-dimensional measuring machine CMM2 is still executing the measuring operation or the copying operation (step S23, YES), decision process in step S23 is repeated. If the three-dimensional measuring machine CMM2 stops the measuring operation or the copying operation (step S23, NO), the decision process in step S23 being repeated is out of a loop state, and the move command of the three-dimensional measuring machine CMM1 is executed (step S24).

With the algorithm explained above and shown in FIG.4, the movement of the three-dimensional measuring machine CMM1 is inhibited when the three-dimensional measuring machine CMM2 is executing the measuring operation or the copying operation. Therefore, the vibration caused by the movement of the three-dimensional measuring machine CMM1 is never transmitted to the three-dimensional measuring machine CMM2 that is executing the measuring operation or the copying operation. As a result, a new form measuring apparatus capable of attaining high operability and measuring accuracy by eliminating the influence of the vibration between a plurality of measuring machines can be realized.

Here, only when the three-dimensional measuring machine CMM2 is executing the measuring operation or the copying operation, the movement of the three-dimensional measuring machine CMM1 is inhibited. When the three-dimensional measuring machine CMM2 is stopping or the three-dimensional measuring machine CMM2 is moving, the moving operation of the three-dimensional measuring machine CMM1 is allowed.

In other words, when the controlling unit 41 issues the move command to the three-dimensional measuring machine CMM1, the controlling unit 41 applies control to issue the move command to the three-dimensional measuring machine CMM1 when the three-dimensional measuring machine CMM2 is stopping, issue the standby command to the three-dimensional measuring machine CMM1 when the three-dimensional measuring machine CMM2 is executing the measuring operation or the copying operation, and also issue the move command to the three-dimensional measuring machine CMM1 to execute the moving operation when the end of the measuring operation or the copying operation of the three-dimensional measuring machine CMM2 is detected, and issue the move command to the three-dimensional measuring machine CMM1 when the three-dimensional measuring machine CMM2 is moving.

Next, by reference to FIG.5, the process done when the controlling unit 41 for controlling the three-dimensional measuring machine CMM1 selects the measure command in step S13 in FIG.3 will be explained hereunder.

The controlling unit 41 issues the measure command to the three-dimensional measuring machine CMM1 (step S30). First, it is checked whether or the error is occurring in the three-dimensional measuring machine CMM2 (step S31). If it is checked in decision step in step S31 that the error is occurring in the three-dimensional measuring machine CMM2 (step S30, YES), decision step in step S32 is repeated in the process in FIG.5 (step S32) until the error is recovered in the three-dimensional measuring machine CMM2. Thus, the further process cannot be taken. If it is checked that the error is recovered in the three-dimensional measuring machine CMM2 (step S32, YES), the decision process in step S32 being repeated is out of a loop state, and execution of the measure command of the three-dimensional measuring machine CMM1 is continued.

Then, it is checked whether or not the three-dimensional measuring machine CMM2 is in a stop state (step S33). If it is decided that the three-dimensional measuring machine CMM2 is in a stop state (step S33, YES), it is decided whether the three-dimensional measuring machine CMM1 to which the measure command is issued is the main measuring machine or the sub measuring machine (step S34). In the case of the present embodiment, since the three-dimensional measuring machine CMM1 is the main measuring machine, the measure command is executed (step S39).

In contrast, if the three-dimensional measuring machine CMM1 is the sub measuring machine (step S34, YES), it is checked whether or not the three-dimensional measuring machine CMM2 as the other measuring machine is accepting the measure command (step S35). Only if the three-dimensional measuring machine CMM2 as the other measuring machine is not accepting the measure command (step S35, NO), the measure command is executed (step S39).

If it is decided that the three-dimensional measuring machine CMM2 as the other measuring machine is not in a stop state (step S33, No) or if it is decided that the three-dimensional measuring machine CMM2 as the other measuring machine is accepting the measure command (step S35, YES), the process of the present measure command algorithm goes to step S36. Here, the controlling unit 41 transmits a standby state status before the measure request to the three-dimensional measuring machine CMM2, and issues the standby command to the three-dimensional measuring machine CMM1 while informing the three-dimensional measuring machine CMM2 of the measure request of the three-dimensional measuring machine CMM1 (step S36).

After the process in step S36 is executed, then the same decision processes in step S31 and step S32 are executed, i.e., it is checked whether or not the error occurred in the three-dimensional measuring machine CMM2 (step S37). If it is checked that the error occurred in the three-dimensional measuring machine CMM2 (step S37, YES), the process goes back to step S32 and the processes subsequent to step S32 are executed again. If it is checked that the error did not occur in the three-dimensional measuring machine CMM2 (step S37, NO), it is checked whether or not the error has been recovered in the three-dimensional measuring machine CMM2 (step S38). If it is checked that the error has been recovered in the three-dimensional measuring machine CMM2 (step S38, YES), the measure command of the three-dimensional measuring machine CMM1 is executed (step S39). Here, the processes in step S37 and step S38 are executed repeatedly until it is checked in step S38 that the error in the three-dimensional measuring machine CMM2 is recovered.

With the algorithm explained above and shown in FIG.5, the measuring operation of the three-dimensional measuring machine CMM1 is inhibited when the three-dimensional measuring machine CMM2 is executing the measuring operation, the copying operation or moving operation. Therefore, the vibration caused by the operation of the three-dimensional measuring machine CMM2 is never transmitted to the three-dimensional measuring machine CMM1 that is executing the measuring operation. As a result, a new form measuring apparatus capable of attaining high operability and measuring accuracy by eliminating the influence of the vibration between a plurality of measuring machines can be realized.

Here, only when the three-dimensional measuring machine CMM2 is stopping, the measurement of the three-dimensional measuring machine CMM1 is allowed. When the three-dimensional measuring machine CMM2 is executing the operation, the measuring operation of the three-dimensional measuring machine CMM1 is inhibited.

In other words, when the controlling unit 41 issues the measure command to the three-dimensional measuring machine CMM1, such controlling unit 41 issues the measure command to the three-dimensional measuring machine CMM1 when the three-dimensional measuring machine CMM2 is stopping, issues the standby command to the three-dimensional measuring machine CMM1 when the three-dimensional measuring machine CMM2 is executing the measuring operation, the copying operation or moving operation, issues the measure command to the three-dimensional measuring machine CMM1 to execute the measuring operation when the end of the measuring operation, the copying operation or the movement of the three-dimensional measuring machine CMM2 is detected.

Here, the reason why it is checked in step S34 whether the destination to which the controlling unit 41 is issuing the measure command corresponds to the main measuring machine or the sub measuring machine is that competitive operations of two three-dimensional measuring machines CMM1, CMM2 should be avoided when two three-dimensional measuring machines CMM1, CMM2 execute simultaneously the operation. The operation of the main measuring machine is executed on a priority basis and the operation of the sub measuring machine is restricted, and as a result efficiency of the form measurement can be improved.

Various variations or improvements can be applied to the above embodiment. For example, in the process explanation of the above form measuring apparatus according to the present embodiment by reference to FIG.4 and FIG.5, the case where one measuring machine is the three-dimensional measuring machine CMM1 and the other measuring machine is the three-dimensional measuring machine CMM2 is explained. However, the algorithms explained in FIG.4 and FIG.5 are executable in all three-dimensional measuring machines provided to the form measuring apparatus according to the present invention.

Also, the form measuring apparatus according to the present invention, the mode in which two three-dimensional measuring machines are equipped is explained by way of example. But the equipped number of the three-dimensional measuring machines may be set to three or more.

Also, the algorithm of the measuring command explained by reference to FIG.5 can be employed as the algorithm of the copy command to issue the copying operation command as it is. It is apparent from the recitation of claims that varied or improved modes can be contained in the technical scope of the present invention.

## Claims

1. A form measuring apparatus to increase measuring accuracy by eliminating the influence of vibration between at least two measuring machines (CMM1, CMM2), comprising:
at least two measuring machines (CMM1, CMM2) equipped with a driving mechanism respectively, and arranged opposedly to put a measured subject therebetween;
at least two controlling units (41,42) connected to the measuring machines (CMM1, CMM2) correspondingly respectively, and detecting operation states of the measuring machines (CMM1, CMM2) connected; and
a cooperation-enabling means connecting at least two of the controlling units (41,42) to each other, wherein the controlling units (41, 42) are configured to issue, in response to a detected result of the operation state from one measuring machine (CMM1), an operation command to one other measuring machine (CMM2) the measuring machines (CMM1, CMM2) being conjunction with each other
wherein a move command to move the measuring machines (CMM1, CMM2), a measure/copy command to cause the measuring machines (CMM1, CMM2) to execute the measuring or copying operation of the measured subject, and a standby command to cause the measuring machines (CMM1, CMM2) to stand by are contained in the operation command that the controlling units (41, 42) issue; the form measuring apparatus being **characterised in that** the form measuring apparatus is configured to:
when the controlling unit (42) issues the move command to the other measuring machine (CMM2), such controlling unit (42)
issues the move command to the other measuring machine (CMM2) when the one measuring machine (CMM1) is stopping;
issues the standby command to the other measuring machine (CMM2) when the one measuring machine (CMM1) is executing the measuring or copying operation, and also issues the move command to the other measuring machine (CMM2) to execute a moving operation when an end of the measuring or copying operation of the one measuring machine (CMM1) is detected, and
issues the move command to the other measuring machine (CMM2) when the one measuring machine (CMM1) is moving.

2. A form measuring apparatus to increase measuring accuracy by eliminating the influence of vibration between at least two measuring machines (CMM1, CMM2), comprising:
at least two measuring machines (CMM1, CMM2) equipped with a driving mechanism respectively, and arranged opposedly to put a measured subject therebetween; at least two controlling units (41,42) connected to the measuring machines (CMM1, CMM2) correspondingly respectively, and detecting operation states of the measuring machines (CMM1, CMM2) connected; and
a cooperation-enabling means connecting at least two of the controlling units (41,42) to each other, wherein the controlling units (41, 42) are configured to issue, in response to a detected result of the operation state from one measuring machine (CMM1), an operation command to one other measuring machine (CMM2) the measuring machines (CMM1, CMM2) being conjunction with each other
wherein a move command to move the measuring machines (CMM1, CMM2), a measure/copy command to cause the measuring machines (CMM1, CMM2) to execute the measuring or copying operation of the measured subject, and a standby command to cause the measuring machines (CMM1, CMM2) to stand by are contained in the operation command that the controlling units (41, 42) issue; the form measuring apparatus being **characterised in that** the form measuring apparatus is configured to:
when the controlling unit (42) issues the measure/copy command to the other measuring machine (CMM2), such controlling unit (42) issues the measure/copy command to the other measuring machine (CMM2) when the one measuring machine (CMM1) is stopping, and
issues the standby command to the other measuring machine (CMM2) when the one measuring machine (CMM1) is executing the measuring operation, the copying operation or the moving operation, and also issues the measure/copy command to the other measuring machine (CMM2) to execute the measuring or copying operation when an end of the measuring operation, the copying operation, or the moving operation of the one measuring machine (CMM1) is detected.

3. A form measuring apparatus according to claim 1 or claim 2, wherein the controlling units (41,42) are constructed to control any one of the one measuring machine (CMM1, CMM2) and the other measuring machine (CMM1, CMM2) as a main measuring machine that is operated on a priority basis, and control remaining one as a sub measuring machine whose operation is restricted depending upon an operation state of the main measuring machine.

## Patentansprüche

1. Formmessvorrichtung zur Erhöhung der Messgenauigkeit durch Beseitigen des Einflusses von Schwingungen zwischen wenigstens zwei Messapparaten (CMM1, CMM2), die umfasst:
wenigstens zwei Messapparate (CMM1, CMM2), die jeweils mit einem Antriebsmechanismus ausgestattet sind und entgegengesetzt angeordnet sind, um einen gemessenen Gegenstand dazwischen zu setzen;
wenigstens zwei Steuereinheiten (41, 42), die mit den jeweils entsprechenden Messapparaten (CMM1, CMM2) verbunden sind und Betriebszustände der verbundenen Messapparate (CMM1, CMM2) erfassen;
ein Mittel zum Ermöglichen des Zusammenwirkens, das wenigstens zwei der Steuereinheiten (41, 42) miteinander verbindet, wobei die Steuereinheiten (41, 42) konfiguriert sind, um ansprechend auf ein Erfassungsergebnis des Betriebszustands von einem Messapparat (CMM1) einen Betriebsbefehl an einen anderen Messapparat (CMM2) auszugeben, wobei die Messapparate (CMM1, CMM2) miteinander in Verbindung stehen,
wobei ein Verschiebungsbefehl, um die Messapparate (CMM1, CMM2) zu verschieben, ein Mess-/Kopierbefehl, um zu bewirken, dass die Messapparate (CMM1, CMM2) den Mess- oder Kopierbetrieb des gemessenen Gegenstands ausführen, und ein Bereitschaftsbefehl, um zu bewirken, dass die Messapparate (CMM1, CMM2) in Bereitschaft stehen, in dem Betriebsbefehl enthalten sind, den die Steuereinheiten (41, 42) ausgeben; wobei die Formmessvorrichtung **dadurch gekennzeichnet ist, dass** die Formmessvorrichtung konfiguriert ist, dass:
wenn die Steuereinheit (42) den Verschiebungsbefehl an den anderen Messapparat (CMM2) ausgibt, die derartige Steuereinheit (42)
den Verschiebungsbefehl an den anderen Messapparate (CMM2) ausgibt, wenn der eine Messapparat (CMM1) stoppt;
den Bereitschaftsbefehl an den anderen Messapparat (CMM2) ausgibt, wenn der eine Messapparat (CMM1) den Mess- oder Kopierbetrieb ausführt, und auch den Verschiebungsbefehl an den anderen Messapparat (CMM2) ausgibt, um einen Verschiebungsbetrieb auszuführen, wenn ein Ende des Mess- oder Kopierbetriebs des einen Messapparats (CMM1) erfasst wird, und
den Verschiebungsbefehl an den anderen Messapparat (CMM2) ausgibt, wenn sich der eine Messapparat (CMM1) verschiebt.

2. Formmessvorrichtung zur Erhöhung der Messgenauigkeit durch Beseitigen des Einflusses von Schwingungen zwischen wenigstens zwei Messapparaten (CMM1, CMM2), die umfasst:
wenigstens zwei Messapparate (CMM1, CMM2), die jeweils mit einem Antriebsmechanismus ausgestattet sind und entgegengesetzt angeordnet sind, um einen gemessenen Gegenstand dazwischen zu setzen;
wenigstens zwei Steuereinheiten (41, 42), die mit den jeweils entsprechenden Messapparaten (CMM1, CMM2) verbunden sind und Betriebszustände der verbundenen Messapparate (CMM1, CMM2) erfassen;
ein Mittel zum Ermöglichen des Zusammenwirkens, das wenigstens zwei der Steuereinheiten (41, 42) miteinander verbindet, wobei die Steuereinheiten (41, 42) konfiguriert sind, um ansprechend auf ein Erfassungsergebnis des Betriebszustands von einem Messapparat (CMM1) einen Betriebsbefehl an einen anderen Messapparat (CMM2) auszugeben, wobei die Messapparate (CMM1, CMM2) miteinander in Verbindung stehen,
wobei ein Verschiebungsbefehl, um die Messapparaten (CMM1, CMM2) zu verschieben, ein Mess-/Kopierbefehl, um zu bewirken, dass die Messapparate (CMM1, CMM2) den Mess- oder Kopierbetrieb des gemessenen Gegenstands ausführen, und ein Bereitschaftsbefehl, um zu bewirken, dass die Messapparate (CMM1, CMM2) in Bereitschaft stehen, in dem Betriebsbefehl enthalten sind, den die Steuereinheiten (41, 42) ausgeben; wobei die Formmessvorrichtung **dadurch gekennzeichnet ist, dass** die Formmessvorrichtung konfiguriert ist, dass:
wenn die Steuereinheit (42) den Mess-/Kopierbefehl an den anderen Messapparat (CMM2) ausgibt, die derartige Steuereinheit (42) den Mess-/Kopierbefehl an den anderen Messapparat (CMM2) ausgibt, wenn der eine Messapparat (CMM1) stoppt, und
den Bereitschaftsbefehl an den anderen Messapparat (CMM2) ausgibt, wenn der eine Messapparat (CMM1) den Messbetrieb, den Kopierbetrieb oder den Verschiebungsbetrieb ausführt, und auch den Mess-/Kopierbefehl an den anderen Messapparat (CMM2) ausgibt, um den Messbetrieb oder Kopierbetrieb auszuführen, wenn ein Ende des Messbetriebs, des Kopierbetriebs oder des Verschiebungsbetriebs des einen Messapparats (CMM1) erfasst wird.

3. Formmessvorrichtung nach Anspruch 1 oder Anspruch 2, wobei die Steuereinheiten (41, 42) aufgebaut sind, um jeden des einen Messapparats (CMM1, CMM2) und des anderen Messapparats (CMM1, CMM2) als einen Hauptmessapparat, der auf einer Prioritätsbasis betrieben wird, zu steuern, und den übrigen als einen Nebenmessapparat, dessen Betrieb abhängig von einem Betriebszustand des Hauptmessapparats beschränkt wird, zu steuern.

## Revendications

1. Appareil de mesure de forme permettant d'améliorer la précision de mesure en éliminant l'influence des vibrations entre au moins deux machines de mesure (CMM1, CMM2), comprenant :
au moins deux machines de mesure (CMM1, CMM2) équipées respectivement d'un mécanisme d'entraînement, et agencées de manière opposée pour placer entre elles un sujet mesuré ;
au moins deux unités de commande (41, 42) reliées aux machines de mesure (CMM1, CMM2) respectivement de manière correspondante, et détectant les états de fonctionnement des machines de mesure (CMM1, CMM2) reliées ; et
un moyen d'activation de coopération reliant entre elles au moins deux des unités de commande (41, 42), dans lequel les unités de commande (41, 42) sont configurées pour fournir, en réponse au résultat détecté de l'état de fonctionnement d'une machine de mesure (CMM1), une commande d'opération à une autre machine de mesure (CMM2), les machines de mesure (CMM1, CMM2) étant en conjonction entre elles, dans lequel une commande de déplacement pour déplacer les machines de mesure (CMM1, CMM2), une commande de mesure/copie pour faire exécuter par les machines de mesure (CMM1, CMM2) l'opération de mesure ou de copie du sujet mesuré, et une commande de veille pour mettre en veille les machines de mesure (CMM1, CMM2) sont contenues dans la commande d'opération fournie par les unités de commande (41, 42), l'appareil de mesure de forme étant **caractérisé en ce que** l'appareil de mesure de forme est configuré pour :
lorsque l'unité de commande (42) fournit la commande de déplacement à l'autre machine de mesure (CMM2), cette unité de commande (42)
fournit la commande de déplacement à l'autre machine de mesure (CMM2) lorsque la première machine de mesure (CMM1) s'arrête ;
fournit la commande de veille à l'autre machine de mesure (CMM2) lorsque la première machine de mesure (CMM1) exécute l'opération de mesure ou de copie, et fournit également la commande de déplacement à l'autre machine de mesure (CMM2) pour exécuter une opération de déplacement lorsque la fin de l'opération de mesure ou de copie de la première machine de mesure (CMM1) est détectée, et
fournit la commande de déplacement à l'autre machine de mesure (CMM2) lorsque la première machine de mesure (CMM1) se déplace.

2. Appareil de mesure de forme permettant d'améliorer la précision de mesure en éliminant l'influence des vibrations entre au moins deux machines de mesure (CMM1, CMM2), comprenant :
au moins deux machines de mesure (CMM1, CMM2) équipées respectivement d'un mécanisme d'entraînement, et agencées de manière opposée pour placer entre elles un sujet mesuré ;
au moins deux unités de commande (41, 42) reliées aux machines de mesure (CMM1, CMM2) respectivement de manière correspondante, et détectant les états de fonctionnement des machines de mesure (CMM1, CMM2) reliées ; et
un moyen d'activation de coopération reliant entre elles au moins deux des unités de commande (41, 42), dans lequel les unités de commande (41, 42) sont configurées pour fournir, en réponse au résultat détecté de l'état de fonctionnement d'une machine de mesure (CMM1), une commande d'opération à une autre machine de mesure (CMM2), les machines de mesure (CMM1, CMM2) étant en conjonction entre elles, dans lequel une commande de déplacement pour déplacer les machines de mesure (CMM1, CMM2), une commande de mesure/copie pour faire exécuter par les machines de mesure (CMM1, CMM2) l'opération de mesure ou de copie du sujet mesuré, et une commande de veille pour mettre en veille les machines de mesure (CMM1, CMM2) sont contenues dans la commande d'opération fournie par les unités de commande (41, 42), l'appareil de mesure de forme étant **caractérisé en ce que** l'appareil de mesure de forme est configuré pour :
lorsque l'unité de commande (42) fournit la commande de mesure/copie à l'autre machine de mesure (CMM2), cette unité de commande (42) fournit la commande de mesure/copie à l'autre machine de mesure (CMM2) lorsque la première machine de mesure (CMM1) s'arrête, et
fournit la commande de veille à l'autre machine de mesure (CMM2) lorsque la première machine de mesure (CMM1) exécute l'opération de mesure, l'opération de copie ou l'opération de déplacement, et fournit également la commande de mesure/copie à l'autre machine de mesure (CMM2) pour exécuter l'opération de mesure ou de copie lorsque la fin de l'opération de mesure, de l'opération de copie ou de l'opération de déplacement de la première machine de mesure (CMM1) est détectée.

3. Appareil de mesure de forme selon la revendication 1 ou la revendication 2, dans lequel les unités de commandes (41, 42) sont construites pour commander une machine quelconque parmi la première machine de mesure (CMM1, CMM2) et l'autre machine de mesure (CMM1, CMM2) en tant que machine de mesure principale actionnée prioritairement, et commande la machine restante en tant que machine de mesure secondaire dont le fonctionnement est limité en fonction de l'état de fonctionnement de la machine de mesure principale.
